# EUROPÄISCHE PATENTANMELDUNG

(11) **EP 4 843 935 A1**
(43) Veröffentlichungstag der Anmeldung: **25.11.2026**
(21) Anmeldenummer: 26179190.9
(22) Anmeldetag: 18.05.2026
(51) Int. Cl.: B65G 57/18, B65G 57/24, B65G 61/00

(54) **LATTENLEGEVORRICHTUNG, SCHNITTHOLZSTAPELANLAGE UND VERFAHREN ZUM ABLEGEN VON LATTEN, INSBESONDERE VON LEISTEN UND/ODER KANTHÖLZERN, BEI DER SCHNITTHOLZPAKETIERUNG**

(30) Priorität: 19.05.2025 DE 102025119283
(71) Anmelder: H.I.T. Maschinenbau GmbH + Co. KG, 86833 Ettringen (DE)
(72) Erfinder: ANTON, Franz, 87749 Hawangen (DE)
(74) Vertreter: Maucher Jenkins Patent- und Rechtsanwälte Partnerschaft mbB

(57) **Zusammenfassung**

Die Erfindung betrifft unter anderem eine Lattenlegevorrichtung (1) zum Ablegen von Latten (19) auf Lagen (20) aus Schnittholzprodukten (21) bei der Schnittholzpaketierung, wobei die Lattenlegevorrichtung (1) einen Paketträger (2), eine Greifvorrichtung (3) mit zumindest einem Greifer (4) für zumindest eine Latte (19) und eine Bereitstellungszone (5) umfasst, wobei die Greifvorrichtung (3) durch ihren zumindest einen Greifer (4) dazu eingerichtet ist, eine in der Bereitstellungszone (5) bereitgestellte Latte (19) aufzunehmen und auf eine oberste Lage (20) von Schnittholzprodukten (21), die an dem Paketträger (2) angeordnet ist, abzulegen.

## Beschreibung

Die Erfindung betrifft eine Lattenlegevorrichtung zum Ablegen von Latten auf Lagen von Schnittholzprodukten bei der Schnittholzpaketierung, eine Schnittholzstapelanlage und ein Verfahren zum Ablegen von Latten, insbesondere von Leisten und/oder Kanthölzern, auf Lagen von Schnittholzprodukten bei der Schnittholzpaketierung.

Schnittholzstapelanlagen sind aus der Praxis vorbekannt und werden dazu verwendet, Schnittholzprodukte, wie beispielsweise Bretter, Bohlen, Dielen oder auch Balken, in sogenannten Schnittholzpaketen zusammenzufassen. Dabei werden die Schnittholzpakete lagenweise aus Schnittholzprodukten aufgebaut. Zwischen die Lagen aus Schnittholzprodukten können Latten, die dann oftmals auch als Stapellatten bezeichnet werden, gelegt werden. Die Latten werden zum Beispiel zur Stabilisierung der Schnittholzpakete oder auch zur besseren Trocknung der Schnittholzprodukte, die in dem Schnittholzpaket zusammengefasst sind, zwischen den Lagen angeordnet.

Die automatische Legung von Latten bei der Schnittholzpaketierung hat in den letzten Jahren stark zugenommen. Die Leistung der Schnittholzstapelanlagen ist gestiegen, die Befüllung der bisher verwendeten mechanischen Lattenmagazine, aus denen die Latten auf die Lagen von Schnittholzprodukten abgelegt werden, durch Mitarbeiter ist sowohl monoton als auch anstrengend und die Umgebungsbedingungen der typischen Schnittholzstapelanlagen sind durch einen hohen Lärmpegel, hohe Temperaturen im Sommer, niedrige Temperaturen im Winter, Zugluft und Staub gekennzeichnet.

Die einerseits zur Trocknung und andererseits zur Stabilisierung gelegten Latten können sich sowohl durch ihre Abmessungen als auch in der Qualität und in der Legefrequenz unterscheiden.

Latten zur Trocknung haben meist einen Querschnitt von zum Beispiel 24 x 48 mm und sind in der Regel, abhängig von der Breite des zu trocknenden Schnittholzpakets, zwischen zum Beispiel 1.250 mm und 2.050 mm lang. Diese Latten werden in jeder Lage gelegt. Der Abstand zwischen den Latten einer Lage beträgt, abhängig von der Materialdicke (12 - 300 mm) der zu stapelnden Schnittholzprodukte, in der Regel zwischen 250 mm und 1.000 mm. Nach dem Trocknungsprozess werden diese Latten wieder in Gestellen gesammelt und der Lattenlegevorrichtung erneut zugeführt. Die Qualität dieser Latten ist in der Regel gut, da diese mehrfach verwendet werden.

Bei Latten zur Stabilisierung eines Schnittholzpakets handelt es sich streng genommen in der Regel eher um Leisten. Diese haben meist einen Querschnitt von zum Beispiel 13 x 24 mm und sind in der Regel, abhängig von der Breite des zu trocknenden Schnittholzpakets, zwischen zum Beispiel 900 mm und 1.200 mm lang. Diese Latten werden in der Regel nicht auf jede Lage, sondern, je nach Materialstärke, beispielsweise auf jede zweite Lage und/oder nur einmal in der halben Pakethöhe des Schnittholzpakets gelegt.

Der Abstand zwischen den Latten einer Lage beträgt, abhängig von der zu stapelnden Materialdicke, in der Regel zwischen 1.000 mm und 3.000 mm. Die Qualität dieser Latten ist in der Regel niedrig, da diese nur zur Stabilisierung des Pakets verwendet und nicht mehr von den Kunden zurückgeschickt werden.

Bei aus der Praxis vorbekannten Schnittholzstapelanlagen werden die Latten aus einem Sammelgestell entnommen und in einzelne Lattenmagazine gefüllt. In den Lattenmagazinen sind die Latten übereinandergestapelt. Die Latten werden aus einer Öffnung an der Unterseite der Lattenmagazine direkt auf der jeweils obersten Lage des zu bildenden Schnittholzpakets abgelegt.

Die Lattenmagazine stellen jedoch vergleichsweise hohe Ansprüche an die Beschaffenheit der verwendeten Latten. Die Lattenmagazine lassen oftmals nur geringe Abweichungen der Latten von einem bestimmten Maß zu, ohne dass es zu einem Verkanten der Latten in den Lattenmagazinen kommt. Außerdem ist die Befüllung der Lattenmagazine störungsanfällig. Zudem befinden sich relativ viele Latten in den Lattenmagazinen. Sollen für einen Sortimentswechsel andere Latten gelegt werden, ist eine aufwendige Entnahme der Latten aus den Lattenmagazinen notwendig. Für unterschiedliche Lattendimensionen können zudem andere Lattenmagazine erforderlich sein.

Darüber hinaus können die relativ großen Lattenmagazine die Zugänglichkeit zu der jeweils obersten Lage von Schnittholzprodukten im Schnittholzpaket einschränken. Dies kann eine Störungsbehebung im Störungsfall erschweren und zeitaufwendig machen.

Aufgabe der Erfindung ist daher die Bereitstellung einer Lattenlegevorrichtung, einer Schnittholzstapelanlage und eines Verfahrens zum Ablegen von Latten bei der Schnittholzpaketierung der eingangs genannten Art, die die zuvor skizzierten Nachteile der aus der Praxis vorbekannten Anlagen vermeiden.

Zur Lösung der Aufgabe wird zunächst eine Lattenlegevorrichtung zum Ablegen von Latten auf Lagen von Schnittholzprodukten von Schnittholzpaketen bei der Schnittholzpaketierung vorgeschlagen, die die Mittel und Merkmale des unabhängigen, auf eine derartige Lattenlegevorrichtung gerichteten Anspruchs aufweist. Zur Lösung der Aufgabe wird somit eine Lattenlegevorrichtung der eingangs genannten Art vorgeschlagen, die einen Paketträger, eine Greifvorrichtung mit zumindest einem Greifer für zumindest eine Latte und eine Bereitstellungszone umfasst.

Auf dem Paketträger kann ein Schnittholzpaket lagenweise aus Schnittholzprodukten, wie beispielsweise Brettern, Dielen, Bohlen oder Balken, aufgebaut werden. In der Bereitstellungszone der Lattenlegevorrichtung können die bei der Schnittholzpaketierung benötigten Latten vereinzelt bereitgestellt werden.

Erfindungsgemäß ist die Greifvorrichtung durch ihren zumindest einen Greifer dazu eingerichtet, eine in der Bereitstellungszone bereitgestellte Latte aufzunehmen und auf eine oberste Lage von Schnittholzprodukten, die an dem Paketträger angeordnet ist, abzulegen.

Die erfindungsgemäße Lattenlegevorrichtung kommt somit vollständig ohne konventionelle Lattenmagazine aus, die bei den aus der Praxis vorbekannten Schnittholzstapelanlagen und den daran verwendeten Lattenlegevorrichtungen die zuvor skizzierten Nachteile verursachen.

Bei einer Ausführungsform der Lattenlegevorrichtung weist diese zumindest eine Zuführvorrichtung auf, mit der die Latten in die Bereitstellungszone transportierbar sind und von der die Latten mit dem zumindest einen Greifer aufnehmbar sind. Als Zuführvorrichtung kann beispielsweise ein Linearförderer vorgesehen sein. Besonders bevorzugt ist ein Linearförderer als Zuführvorrichtung vorgesehen, der zumindest ein Förderband oder zwei oder auch drei oder mehr voneinander beabstandete und parallellaufende Förderbänder aufweist. Die Latten können mit dem Linearförderer in die Bereitstellungszone bewegt werden und direkt von dem in der Bereitstellungszone befindlichen Teil des Linearförderers mit dem zumindest einen Greifer der Greifvorrichtung aufgenommen werden. Der Greifer transportiert dann eine aufgenommene Latte zum Paketträger und kann die Latte dort auf eine bereits auf dem Paketträger angeordnete Lage von Schnittholzprodukten ablegen.

Die Lattenlegevorrichtung kann bei einer Ausführungsform eine erste Zuführvorrichtung für einen ersten Typ von Latten, beispielsweise für Latten in Form von Leisten, und eine zweite Zuführvorrichtung für einen zweiten Typ von Latten, beispielsweise für Latten in Form von Kanthölzern, aufweisen. Bei dieser Ausführungsform der Lattenlegevorrichtung können sowohl Latten zur Trocknung der Schnittholzprodukte als auch Latten zur Stabilisierung der Schnittholzpakete in der Bereitstellungszone der Lattenlegevorrichtung bereitgestellt und bedarfsweise aufgenommen werden.

Die unterschiedlichen Typen von Latten können dann bei Bedarf aus der Bereitstellungszone direkt mit dem zumindest einen Greifer der Greifvorrichtung der Lattenlegevorrichtung aufgenommen, zum Paketträger bewegt und dort auf eine Lage von Schnittholzprodukten an dem Paketträger abgelegt werden.

Besonders bevorzugt sind die beiden Zuführvorrichtungen auf einer Seite des Paketträgers und/oder nebeneinander angeordnet. So können die in der Bereitstellungszone angeordneten Teile der Zuführvorrichtungen, auf denen die Latten bereitgehalten werden, besonders effizient mit der Greifvorrichtung und ihrem zumindest einen Greifer angesteuert werden.

Die beiden zuvor erwähnten Zuführvorrichtungen können zumindest zu einem Teil in der Bereitstellungszone der Lattenlegevorrichtung angeordnet sein.

Die Lattenlegevorrichtung kann zumindest eine Vereinzelungsvorrichtung aufweisen. Die Vereinzelungsvorrichtung kann zur vereinzelten Abgabe der Latten in die Bereitstellungszone, insbesondere an die zumindest eine Zuführvorrichtung, eingerichtet sein. Mithilfe der Vereinzelungsvorrichtung können Latten aus einem Lattenvorrat, beispielsweise aus einem Lattengestell, ausgefasst und vereinzelt an die zumindest eine Zuführvorrichtung der Lattenlegevorrichtung übergeben werden. Weist die Zuführvorrichtung zumindest ein Förderband auf, kann die Vereinzelungsvorrichtung die Latten vorzugsweise getaktet auf das laufende Förderband ablegen. So können die Latten mit einem Abstand zueinander in die Bereitstellungszone gelangen.

Die Lattenlegevorrichtung kann eine Positioniervorrichtung zur Positionierung von Latten in der Bereitstellungszone, insbesondere an der zumindest einen Zuführvorrichtung, aufweisen. Die Positioniervorrichtung sorgt dafür, dass die in die Bereitstellungszone bewegten Latten in der Bereitstellungszone die für eine Aufnahme erforderlichen Positionen zielgenau einnehmen.

In diesem Zusammenhang kann es vorteilhaft sein, wenn die Positioniervorrichtung zumindest einen Positionieranschlag aufweist, der eine Aufnahmeposition definiert, aus der die Latten mit der Greifvorrichtung aufnehmbar sind. Bei einer bevorzugten Ausführungsform der Lattenlegevorrichtung weist diese eine Positioniervorrichtung mit zwei oder mehr Positionieranschlägen für Latten auf, die Aufnahmepositionen definieren, aus denen die Latten mit der Greifvorrichtung aufnehmbar sind.

Definierte Positionieranschläge sorgen dafür, dass die Latten in der Bereitstellungszone möglichst präzise ihre jeweilige Aufnahmeposition einnehmen. Besonders vorteilhaft ist es, wenn der oder die Positionieranschläge jeweils aus einer Ausgangsposition in eine Halteposition in der Bereitstellungszone bewegt werden können. Diese Variante der Positionieranschläge ist besonders vorteilhaft im Zusammenhang mit einer Zuführvorrichtung, die durch einen Linearförderer gebildet ist. Der Linearförderer kann die Latten in die Bereitstellungszone bewegen. Sobald eine Latte einen oder mehrere einer Aufnahmeposition zugeordnete Positionieranschläge erreicht, wird die Latte trotz einer fortgesetzten Bewegung des Linearförderer unterhalb der Latte von dem Positionieranschlag oder den Positionieranschlägen zurück- und dadurch in der Aufnahmeposition gehalten.

Mithilfe einer entsprechenden Anzahl voneinander beabstandet angeordneter Positionieranschläge ist es somit möglich, die Bereitstellungszone mit mehreren und in unterschiedlichen Aufnahmepositionen angeordneten Latten zu bestücken. Dies begünstigt die vorzugsweise gleichzeitige Aufnahme von Latten aus der Bereitstellungszone mithilfe der Greifvorrichtung der Lattenlegevorrichtung und die weiter unten noch näher erläuterte gleichzeitige Ablage einer Mehrzahl von Latten auf eine oberste Lage von Schnittholzprodukten eines aufzubauenden Schnittholzpakets. In diesem Zusammenhang ist es zweckmäßig, wenn die Greifvorrichtung eine Anzahl von Greifern aufweist, die einer Anzahl von in der Bereitstellungszone an einer Zuführvorrichtung zur Aufnahme bereitgehaltenen Latten entspricht.

An dieser Stelle sei erwähnt, dass der zumindest eine Greifer der Greifvorrichtung der Lattenlegevorrichtung zur Aufnahme von Latten in eine Aufnahmeposition und zur Ablage von Latten in eine Ablageposition an dem Paketträger absenkbar sein kann.

Eine bereitgehaltene Latte wird dann mithilfe des zumindest einen Greifers aus ihrer Aufnahmeposition in der Bereitstellungszone aufgenommen, indem der Greifer auf die bereitgehaltene Latte abgesenkt wird. Sobald der Greifer eine Latte gegriffen hat, wird der Greifer wieder angehoben und durch eine vorzugsweise horizontal ausgerichtete Transportbewegung in eine Zielposition oberhalb der Ablageposition am Paketträger bewegt. Zur Ablage der Latte kann der Greifer dann in die Ablageposition abgesenkt werden, die Latte freigeben und dadurch auf die an dem Paketträger angeordnete oberste Lage von Schnittholzprodukten des herzustellenden Schnittholzpakets ablegen. Die Ablage der Latten erfolgt dann von oben.

Die Greifvorrichtung kann zumindest eine, vorzugsweise horizontale, Linearführung aufweisen, entlang der der zumindest eine Greifer der Greifvorrichtung zwischen einer Aufnahmeposition in der Bereitstellungszone und einer Ablageposition an dem Paketträger bewegt werden kann. Entlang der vorzugsweise horizontal ausgerichteten Linearführung kann der Greifer dann zwischen der Bereitstellungszone und dem Paketträger der Lattenlegevorrichtung bewegt werden, um Latten aufzunehmen und auf eine oberste Lage von Schnittholzprodukten, die an dem Paketträger angeordnet sind, abzulegen. Die zumindest eine Linearführung kann bei einer Ausführungsform der Lattenlegevorrichtung oberhalb des Paketträgers und oberhalb einer Bereitstellungsebene, in der die Latten in der Bereitstellungszone zur Aufnahme bereitgestellt werden, angeordnet sein.

Bei einer Ausführungsform der Greifvorrichtung weist diese zumindest eine positionsveränderliche Linearführung auf. Besonders vorteilhaft ist es, wenn die Linearführung quer, insbesondere rechtwinklig, zu einer von der Linearführung vorgegebenen Führungsrichtung, in der der zumindest eine Greifer der Greifvorrichtung Latten aus der Bereitstellungszone in die Ablageposition an dem Paketträger bewegt, positionsveränderlich ist. So ist es möglich, Latten mithilfe der Greifvorrichtung in unterschiedlichen Ablagepositionen an dem Paketträger abzulegen und aus unterschiedlichen Aufnahmepositionen aus der Bereitstellungszone der Lattenlegevorrichtung aufzunehmen.

Bei einer Ausführungsform der Lattenlegevorrichtung weist die Greifvorrichtung zumindest einen Führungsträger auf, der an zwei unterschiedlichen Seiten jeweils eine Linearführung für einen Greifer aufweist. Bei dieser Ausführungsform der Lattenlegevorrichtung sind an einem Führungsträger zwei Greifer zur Aufnahme und Ablage von Latten angeordnet und entlang ihrer jeweiligen Linearführung bewegbar. Dem Führungsträger kann hierbei eine Ablageposition an dem Paketträger zugeordnet sein, die mit jedem der beiden Greifer, die an dem Führungsträger entlang ihrer jeweiligen Linearführung bewegbar sind, zur Ablage von Latten angefahren werden kann.

Obwohl die beiden Greifer an den unterschiedlichen Seiten des Trägers entlang ihrer jeweiligen Linearführung bewegbar sind, können sie somit doch ein und dieselbe Ablageposition an dem Paketträger anfahren, um dort Latten auf eine Lage von Schnittholzprodukten abzulegen. Diese Variante der Lattenlegevorrichtung ermöglicht einen Pendelbetrieb, bei dem zwei Greifer zur Ablage von Latten in ein und derselben Ablageposition an dem Paketträger eingerichtet sind. Dies ermöglicht eine Halbierung der Zykluszeit zur Ablage von Latten durch den Einsatz von zwei Greifern, die an einem Führungsträger verfahrbar angeordnet sind.

Während der Ablage einer Latte auf eine erste Lage von Schnittholzprodukten an dem Paketträger kann der zweite Greifer eine weitere Latte aus der Bereitstellungszone zur Ablage auf eine nachfolgend auf den Paketträger positionierten Lage von Schnittholzprodukten aufnehmen. Während der zweite Greifer mit der weiteren Latte aus der Bereitstellungszone zum Paketträger bewegt wird, kann eine weitere Lage von Schnittholzprodukten auf die zuvor mit dem ersten Greifer abgelegte Latte aufgelegt werden. Sobald diese nächste Lage von Schnittholzprodukten an dem Paketträger angeordnet ist, kann die weitere Latte mit dem aus der Bereitstellungszone kommenden zweiten Greifer auf dieser dann obersten Lage des Schnittholzpakets abgelegt werden.

Bei einer Ausführungsform der Lattenlegevorrichtung ist vorgesehen, dass dem Führungsträger eine Aufnahmeposition innerhalb der Bereitstellungszone zugeordnet ist, die mit jedem der beiden Greifer, die an dem Führungsträger entlang ihrer jeweiligen Linearführung bewegbar sind, zur Aufnahme von Latten anfahrbar ist. Dies ermöglicht es, ein und dieselbe Aufnahmeposition innerhalb der Bereitstellungszone mit zwei Greifern anzufahren, die an unterschiedlichen Seiten des Führungsträgers angeordnet sind und somit an unterschiedlichen Linearführungen am Führungsträger unabhängig voneinander bewegt werden können. Auch dies begünstigt eine rasche Aufnahme von Latten zur nachfolgenden Ablage auf eine Lage aus Schnittholzprodukten eines herzustellenden Schnittholzpakets.

Die Greifer an dem Führungsträger können jeweils in einer schräg zur Schwerkraftrichtung ausgerichteten Absenkbewegung in die Aufnahmeposition und/oder in die Ablageposition abgesenkt werden. Trajektorien der beiden Greifer in die Aufnahmeposition und in die Ablageposition können dabei in einem Winkel von kleiner als 180°, insbesondere in einem spitzen Winkel, zueinander ausgerichtet sein. Die Greifer werden somit in einer schräg ausgerichteten Bewegung in die dem Führungsträger zugeordnete Aufnahmeposition und auch in die dem Führungsträger zugeordnete Ablageposition abgesenkt. Die Trajektorien der beiden Greifer können dabei ein V zwischen sich aufspannen.

Die Greifvorrichtung kann zumindest zwei, vorzugsweise horizontale, Linearführungen für Greifer aufweisen. Sind die beiden Linearführungen für Greifer in ihrem Abstand zueinander veränderlich, ist es möglich, mithilfe der Greifer Latten aus unterschiedlichen Aufnahmepositionen aufzunehmen und in unterschiedlichen Ablagepositionen an dem Paketträger abzulegen. Zur Abstandsveränderung der Linearführungen kann die Greifvorrichtung der Lattenlegevorrichtung zumindest eine Querführung aufweisen, entlang der eine Verstellung der Linearführungen relativ zueinander möglich ist.

Weist die Lattenlegevorrichtung mehr als einen Führungsträger auf, können die Führungsträger zur Abstandsveränderung zueinander und zur Positionierung in der Bereitstellungszone entlang der Querführung verstellt werden.

Der zumindest eine Greifer der Lattenlegevorrichtung kann zur Aufnahme von unterschiedlich breiten Latten eingerichtet sein. So ist es möglich, mit einem Greifer relativ schmale Latten genauso wie im Vergleich dazu breitere Latten aufzunehmen, beispielsweise Kanthölzern. Dies steigert die Effizienz der Lattenlegevorrichtung, da so auf separate Greifer zur Aufnahme von unterschiedlich breiten Latten verzichtet werden kann.

Die Lattenlegevorrichtung lässt sich besonders effizient nutzen, wenn eine Aufnahmeposition in der Bereitstellungszone und eine Ablageposition an dem Paketträger in derselben horizontalen Ebene angeordnet sind. So sind Strecken, um die der zumindest eine Greifer bei der Aufnahme von Latten und bei der Ablage von Latten abgesenkt wird, gleich lang. Dies begünstigt eine effiziente Aufnahme und Ablage von Latten bei der Schnittholzpaketierung.

Der Paketträger kann eine höhenverstellbare Aufnahme für ein Schnittholzpaket aufweisen. Mithilfe der höhenverstellbaren Aufnahme kann sichergestellt werden, dass die Bestückung der Lagen von Schnittholzprodukten mit Latten an dem Paketträger immer in derselben horizontalen Ebene erfolgt. Durch den lagenweisen Aufbau eines Schnittholzpakets am Paketträger aus Lagen von Schnittholzprodukten und zwischen den Lagen angeordneten Latten nimmt die Höhe des Schnittholzpakets nach und nach zu. Um sicherzugehen, dass die Ablageposition(en) der Latte oder der Latten immer in derselben horizontalen Ebene liegen, kann die Aufnahme für das aufzubauende Schnittholzpaket lagenweise nach unten verfahren werden.

Zur Lösung der Aufgabe wird auch eine Schnittholzstapelanlage mit einer Lattenlegevorrichtung nach dem auf eine solche gerichteten unabhängigen Anspruch vorgeschlagen.

Die Schnittholzstapelanlage kann eine Schnittholzzuführvorrichtung aufweisen, mit der Schnittholzprodukten dem Paketträger der Lattenlegevorrichtung zugeführt werden können.

Ist das Schnittholzpaket an dem Paketträger vollständig aufgebaut, kann das Schnittholzpaket über eine Paketabführvorrichtung der Schnittholzstapelanlage von dem Paketträger entnommen und einem nachgelagerten Bearbeitungsschritt oder Handhabungsschritt zugeführt werden.

Zur Lösung der Aufgabe wird auch ein Verfahren zum Ablegen von Latten, insbesondere von Leisten und/oder Kanthölzern, auf Lagen von Schnittholzprodukten bei der Schnittholzpaketierung vorgeschlagen, das die Mittel und Merkmale des unabhängigen, auf ein derartiges Verfahren gerichteten Anspruchs aufweist.

Zur Lösung der Aufgabe wird somit insbesondere ein Verfahren zum Ablegen von Latten, insbesondere von Leisten und/oder Kanthölzern, auf Lagen von Schnittholzprodukten bei der Schnittholzpaketierung vorgeschlagen, bei dem Latten in einer Bereitstellungszone vereinzelt bereitgestellt, von dort mit einer Greifvorrichtung aufgenommen und mit der Greifvorrichtung auf eine oberste Lage von Schnittholzprodukten eines aufzubauenden Schnittholzpakets abgelegt werden.

Vorzugsweise wird bei der Durchführung des Verfahrens eine Lattenlegevorrichtung nach einem der auf eine solche gerichteten Ansprüche verwendet. Nach Auflage der Latten auf die oberste Lage von Schnittholzprodukten kann eine neue oberste Lage von Schnittholzprodukten auf den Stabel aus Lagen von Schnittholzprodukten und Latten aufgelegt werden.

Bei einer Ausführungsform des Verfahrens werden mehrere Latten, vorzugsweise alle für eine Lage von Schnittholzprodukten bestimmten Latten, in einem Aufnahmeschritt gemeinsam aufgenommen und in einem Ablageschritt gemeinsam auf die oberste Lage von Schnittholzprodukten des auszubauenden Schnittholzpakets abgelegt. Auf diese Weise ist es möglich, die erforderliche Anzahl von Latten, die zwischen zwei Lagen von Schnittholzprodukten des aufzubauenden Schnittholzpakets benötigt werden, in einem gemeinsamen Aufnahmeschritt aus der Bereitstellungszone aufzunehmen und in einem gemeinsamen Ablageschritt auf die oberste Lage des Schnittholzpakets abzulegen. Dies begünstigt eine wirtschaftliche Durchführung des Verfahrens.

In diesem Zusammenhang ist es sinnvoll, wenn die Greifvorrichtung der Lattenlegevorrichtung eine Anzahl von Greifern aufweist, die der Anzahl von in einem Arbeitsschritt auf eine Lage von Schnittholzprodukten abzulegenden Latten entspricht.

Die Lattenlegevorrichtung kann eine elektromotorische Vorschubeinheit aufweisen, mit der der zumindest eine Greifer zur Aufnahme und Ablage von Latten bewegbar ist. Die Vorschubeinheit erlaubt vorzugsweise eine weg- und/oder geschwindigkeitsabhängige Steuerung des zumindest einen Greifers. So kann der zumindest eine Greifer der Greifvorrichtung, vorzugsweise sämtliche Greifer der Greifvorrichtung, weg- und/oder geschwindigkeitsabhängig mit einer elektromotorischen Vorschubeinheit der Lattenlegevorrichtung gesteuert werden. Die Vorschubeinheit kann einen oder mehrere Elektromotoren umfassen.

Eine Lagebestimmung des zumindest einen Greifers kann durch einen Präzisionswegaufnehmer der Lattenlegevorrichtung erfolgen. Bei Erreichen einer Zielposition des zumindest einen Greifers oberhalb der Ablageposition kann die mit dem Greifer gehaltene Latte unter Berücksichtigung der Ablagehöhe auf eine oberste Lage von Schnittholzprodukten, die an dem Paketträger angeordnet ist, abgelegt werden. Danach kann der zumindest eine Greifer wieder zurück in die Bereitstellungszone oberhalb der Aufnahmeposition bewegt werden, um eine dort zwischenzeitlich neu positionierte Latte aufzunehmen. Anschließend kann der Legevorgang von neuem beginnen.

Die Erfindung wird nachfolgend anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder durch Kombination einzelner oder mehrerer Merkmale der Ausführungsbeispiele. Es zeigen:
- Fig. 1: eine Seitenansicht einer ersten Ausführungsform einer Schnittholzstapelanlage mit einer Lattenlegevorrichtung, die einen Paketträger zum Aufbau eines Schnittholzpakets und eine Bereitstellungszone aufweist, in der Latten bereitgestellt werden, wobei die Lattenlegevorrichtung eine Greifvorrichtung mit Greifern aufweist, die zur Aufnahme von Latten aus der Bereitstellungszone und zur Ablage der Latten auf eine oberste Lage aus Schnittholzprodukten an dem Paketträger entlang von Linearführungen zwischen der Bereitstellungszone und dem Paketträger bewegbar sind,
- Figur 2: eine Draufsicht auf die in Figur 1 gezeigte Schnittholzstapelanlage,
- Figur 3: eine perspektivische Ansicht der in den Figuren 1 und 2 gezeigten Schnittholzstapelanlage,
- Figur 4: eine Seitenansicht einer weiteren Ausführungsform einer Schnittholzstapelanlage, die im Vergleich zur in den Figuren 1 bis 3 gezeigten Schnittholzstapelanlage eine zweite Zuführvorrichtung zur Zuführung von Latten in die Bereitstellungszone der Lattenlegevorrichtung aufweist,
- Figur 5: eine Draufsicht auf die in Figur 4 gezeigte Schnittholzstapelanlage sowie
- Figur 6: eine perspektivische Ansicht der in den Figuren 4 und 5 gezeigten Schnittholzstapelanlage.

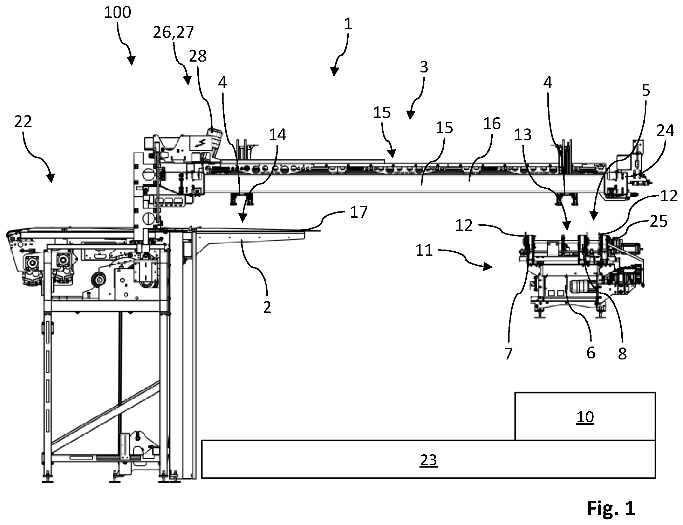

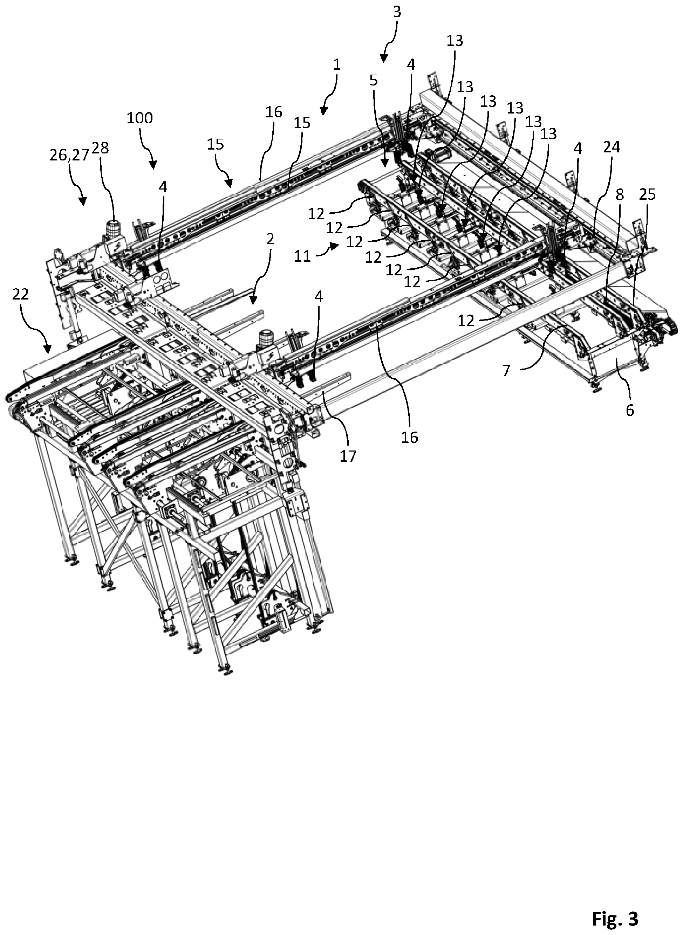

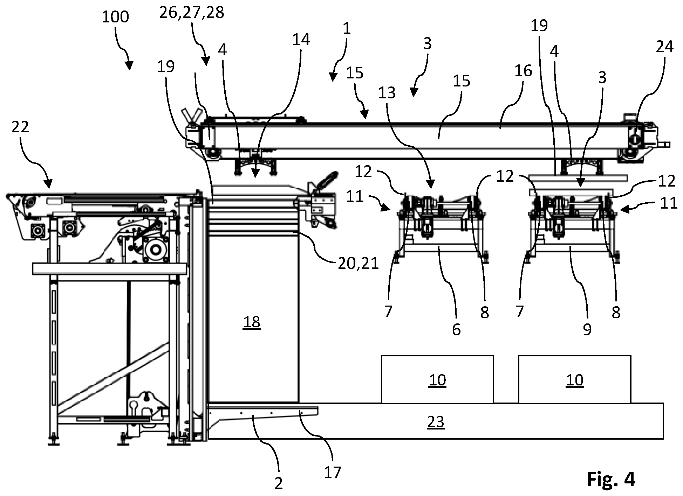

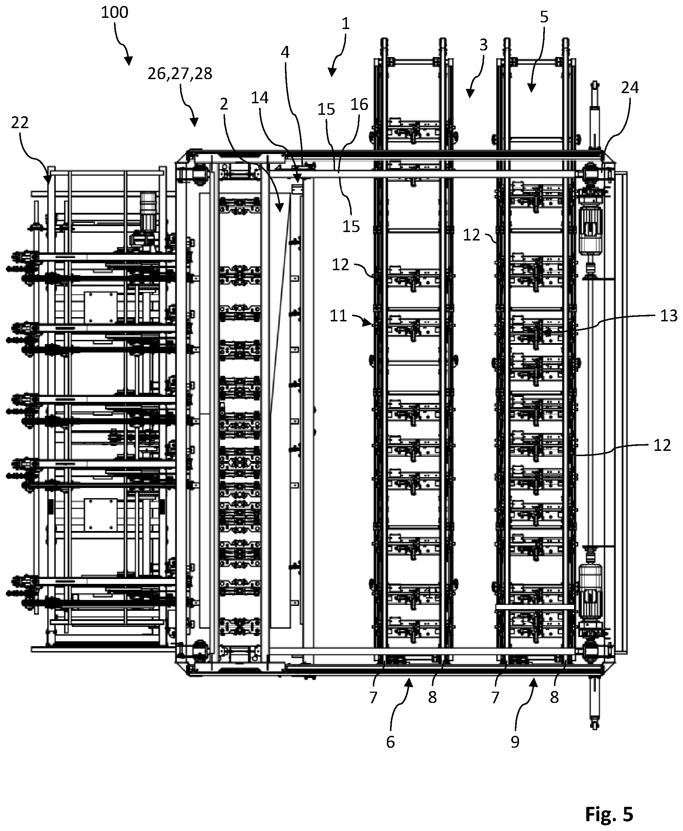

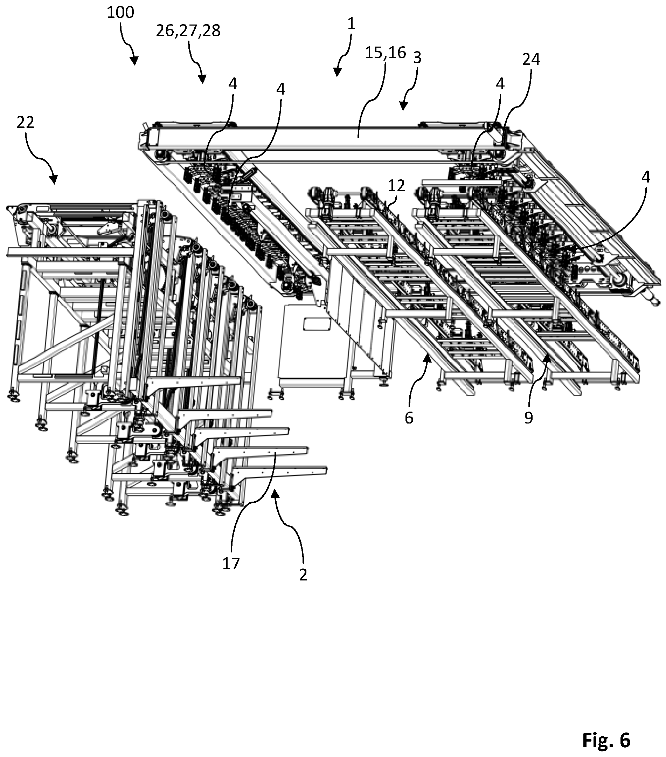

Die Figuren 1-3 zeigen eine erste Ausführungsform einer im Ganzen mit 100 bezeichneten Schnittholzstapelanlage. Die Figuren 4-6 zeigen eine zweite Ausführungsform einer ebenfalls mit 100 bezeichneten Schnittholzstapelanlage.

Beide Schnittholzstapelanlagen 100 weisen jeweils eine im Ganzen mit 1 bezeichnete Lattenlegevorrichtung zum Ablegen von Latten 19 auf Lagen 20 aus Schnittholzprodukten 21 von Schnittholzpaketen 18 auf. Die in den Figuren gezeigten Schnittholzstapelanlagen 100 werden zur Schnittholzpaketierung verwendet.

Die in den Figuren gezeigten Lattenlegevorrichtungen 1 weisen jeweils einen Paketträger 2, eine Greifvorrichtung 3 mit zumindest einem Greifer 4 für zumindest eine Latte 19 und eine Bereitstellungszone 5 auf.

Bei den in den Figuren gezeigten Lattenlegevorrichtungen 1 sind die Greifvorrichtungen 3 mit mehreren Greifern 4 ausgestattet.

Die Greifvorrichtungen 3 sind durch ihre Greifer 4 dazu eingerichtet, in der Bereitstellungszone 5 der jeweiligen Lattenlegevorrichtung 1 bereitgestellte Latten 19 aufzunehmen und auf eine oberste Lage 20 von Schnittholzprodukten 21, die an dem jeweiligen Paketträger 2 der Lattenlegevorrichtung 1 angeordnet ist, abzulegen.

Die in den Figuren 1-3 gezeigte Lattenlegevorrichtung 1 weist eine Zuführvorrichtung 6 in Form eines Linearförderers mit drei Förderbändern 7, 8 und 25 auf, mit der Latten 19 in die Bereitstellungszone 5 der Lattenlegevorrichtung 1 transportiert werden können.

Die in den Figuren 1-4 gezeigte Lattenlegevorrichtung 1 weist zwei Zuführvorrichtungen 6 und 9 in Form von Linearförderern mit jeweils zwei Förderbändern 7 und 8 auf, mit denen Latten 19 in die Bereitstellungszone 5 der Lattenlegevorrichtung 1 transportiert werden können.

Von der Zuführvorrichtung 6 werden die Latten 19 dann mit den Greifern 4 der Greifvorrichtung 3 der Lattenlegevorrichtung 1 aufgenommen. Die Förderbänder 7, 8 und 25 der Zuführvorrichtungen 6 und 9 sind synchronisiert und ermöglichen eine präzise Bereitstellung der Latten 19 in der jeweiligen Bereitstellungszone 5 der Lattenlegevorrichtungen 1. Die Förderbänder 7, 8 und 25 verlaufen dabei durch die Bereitstellungszone 5 der jeweiligen Lattenlegevorrichtung 1.

Die in den Figuren 4-6 gezeigte Lattenlegevorrichtung 1 weist eine erste Zuführvorrichtung 6 für einen ersten Typ von Latten 19 und eine zweite Zuführvorrichtung 9 für einen zweiten Typ von Latten 19 auf. Beide Zuführvorrichtungen 6 und 9 ermöglichen die Zuführung von Latten 19 in die Bereitstellungszone 5 der Lattenlegevorrichtung 1. Die Zuführvorrichtungen 6 und 9 sind nebeneinander auf einer Seite des Paketträgers 2 der Lattenlegevorrichtung 1 angeordnet. Hinsichtlich ihres Aufbaus sind die Zuführvorrichtungen 6 und 9 ähnlich und weisen die beiden Förderbänder 7 und 8 bzw. die drei Förderbänder 7, 8 und 25 auf.

Die beiden Lattenlegevorrichtungen 1 der Figuren 1-3 und 4-6 weisen jeweils eine Vereinzelungsvorrichtung 10 für jede Zuführvorrichtung 6 und 9 auf. Die Vereinzelungsvorrichtungen 10 sind zur vereinzelten Abgabe der Latten 19 in die Bereitstellungszonen 5 und an die Zuführvorrichtungen 6 und 9 eingerichtet. Mithilfe der Vereinzelungsvorrichtungen 10 können Latten 19 aus einem Vorrat an Latten, der in den Figuren nicht dargestellt ist, ausgefasst und einzeln auf die Förderbänder 7, 8 und 25 der Zuführvorrichtungen 6 und 9 abgelegt werden.

Die Lattenlegevorrichtungen 1 weisen zudem für jede Zuführvorrichtung 6 und 9 jeweils eine Positioniervorrichtung 11 auf. Die Positioniervorrichtungen 11 sind jeweils zur Positionierung von Latten 19 in der Bereitstellungszone 5 der jeweiligen Lattenlegevorrichtung 1 an der jeweiligen Zuführvorrichtung 6 und 9 eingerichtet. Die Positioniervorrichtungen 11 umfassen Positionieranschläge 12 für Latten 19, wobei die Positionieranschläge 12 Aufnahmepositionen 13 in der Bereitstellungszone 5 definieren, aus denen die Latten 19 mit der Greifvorrichtung 3 der jeweiligen Lattenlegevorrichtung 1 aufgenommen werden können.

Die Positionieranschläge 12 können jeweils aus einer unterhalb der Förderbänder 7, 8 und 25 befindlichen Ausgangsposition in eine Halteposition in der Bereitstellungszone 5 bewegt, nämlich von unten nach oben verschwenkt werden, um die mit den Förderbändern 7, 8 und 25 der Zuführvorrichtungen 6 und 9 zugeführten Latten 19 in den Aufnahmepositionen 13 zu fixieren, selbst wenn die Förderbänder 7, 8 und 25 zur weiteren Zuführung nachfolgender Latten 19 unter den mit den Positionieranschlägen 12 fixierten Latten 19 hindurchbewegt werden.

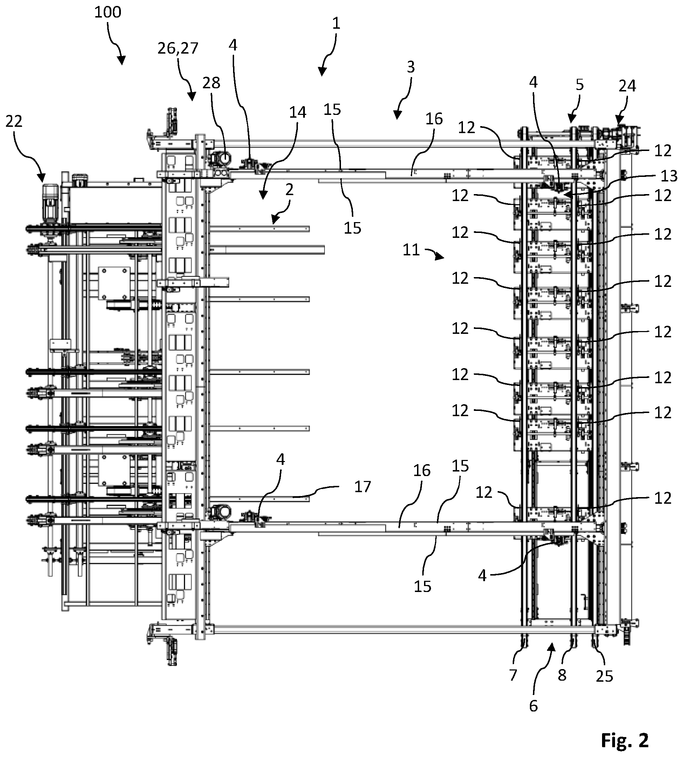

Die Positionieranschläge 12 sind hakenförmig. Vorzugsweise ist jedem Förderband 7, 8 und 25 einer Zuführvorrichtung 6 und 9 für jede der Aufnahmepositionen 13 jeweils ein Positionieranschlag 12 zugeordnet. Sind in der Bereitstellungszone 5 der Lattenlegevorrichtung 1, wie in Figur 2 gezeigt, beispielsweise acht Aufnahmepositionen 13 für Latten 19 vorgesehen, umfasst die Positioniervorrichtung 11 in der Bereitstellungszone 5 an jedem Förderband 7, 8 und 25 der Zuführvorrichtung 6 acht und somit insgesamt dreimal acht, also 24 Positionieranschläge 12.

Die Greifer 4 der Greifvorrichtung 3 der jeweiligen Lattenlegevorrichtung 1 können zur Aufnahme von Latten 19 in eine Aufnahmeposition 13 in der Bereitstellungszone 5 und zur Ablage von Latten 19 in eine Ablageposition 14 am jeweiligen Paketträger 2 der Lattenlegevorrichtung 1 abgesenkt werden. Die Greifvorrichtungen 3 weisen horizontale und dabei positionsveränderliche Linearführungen 15 auf, entlang derer die Greifer 4 zwischen einer jeweiligen Aufnahmeposition 13 und einer Ablageposition 14 bewegt werden können. Der besseren Übersicht halber sind in den Figuren nicht sämtliche Linearführungen 15 mit Greifern 4 gezeigt.

Die in den Figuren gezeigten Lattenlegevorrichtungen 1 weisen Greifvorrichtungen 3 auf, die Führungsträger 16 umfassen, die an zwei unterschiedlichen Seiten jeweils eine Linearführung 15 für jeweils einen Greifer 4 aufweisen. An jedem Führungsträger 16 sind somit zwei Linearführungen 15 und zwei Greifer 4 angeordnet. Jedem Führungsträger 16 ist dabei eine Ablageposition 14 an dem Paketträger 2 zugeordnet, die mit jedem der beiden Greifer 4, die an dem Führungsträger 16 entlang ihrer jeweiligen Linearführung 15 bewegbar sind, zur Ablage von Latten 19 anfahrbar ist.

Somit kann eine einem Führungsträger 16 zugeordnete Ablageposition 14 an dem Paketträger 2 mit beiden Greifern 4, die an dem Führungsträger 16 entlang ihrer jeweiligen Linearführung 15 bewegbar sind, zur Ablage von Latten 19 angesteuert werden.

Dementsprechend ist jedem Führungsträger 16 auch eine Aufnahmeposition 13 innerhalb der Bereitstellungszone 5 zugeordnet, die mit jedem der beiden Greifer 4, die an dem Führungsträger 16 entlang ihrer jeweiligen Linearführung 15 bewegbar sind, zur Aufnahme von Latten 19 anfahrbar ist.

Die Greifer 4 können zum Anfahren der Aufnahmeposition 13 und der Ablageposition 14 von ihrem Führungsträger 16 jeweils in einer schräg zur Schwerkraftrichtung ausgerichteten Absenkbewegung in die Aufnahmeposition 13 und in die Ablageposition 14 abgesenkt werden, die dem Führungsträger 16 jeweils zugeordnet sind. Dabei können Trajektorien der beiden Greifer 4 in die Aufnahmeposition 13 und in die Ablageposition 14 in einem Winkel von kleiner als 180°, insbesondere in spitzem Winkel, zueinander ausgerichtet sein.

Die in den Figuren gezeigten Lattenlegevorrichtungen 1 weisen Greifvorrichtungen 3 mit mehreren horizontalen Linearführungen 15 für Greifer 4 auf, deren Abstand zueinander veränderlich ist. Durch eine Änderung des Abstands der Linearführungen 15 zueinander können die Aufnahmepositionen 13 zur Aufnahme von Latten 19 aus der Bereitstellungszone 5 und die Ablagepositionen zur Ablage von Latten 19 an dem Paketträger 2 verändert werden. Dies steigert die Variabilität der Lattenlegevorrichtung 1. Zur Abstandsveränderung der Linearführungen 15 weisen die Lattenlegevorrichtungen 1 Querführungen 24 auf, entlang derer die Linearführungen 15 bzw. die Führungsträger 16 motorisch verschoben werden können.

Zwei benachbarte Aufnahmepositionen 13 in der Bereitstellungszone 5 haben dabei denselben Abstand zueinander wie zwei benachbarte Ablagepositionen 14 an dem Paketträger 2. Auf diese Weise können die in der Bereitstellungszone 5 bereitgestellten Latten 19 aufgenommen und durch eine horizontale Bewegung hin zum Paketträger 2 und ein anschließendes Absenken der Greifer 4 in die Ablagepositionen 14 an dem Paketträger 2 bewegt werden, ohne dass eine Abstandsveränderung der Linearführungen 15 zueinander erforderlich wäre.

Die Greifer 4 der in den Figuren gezeigten Lattenlegevorrichtungen 1 sind zur Aufnahme von unterschiedlich breiten Latten eingerichtet. Insbesondere bei der in den Figuren 4-6 gezeigten Lattenlegevorrichtung 1 ist dies von erheblicher Bedeutung, da so auf den beiden Zuführvorrichtungen 6 und 9 unterschiedliche Typen von Latten 19 in der Bereitstellungszone 5 zur Aufnahme mit den Greifern 4 bereitgehalten werden können.

Die Figuren 1 und 4 zeigen, dass die Aufnahmepositionen 13 und die Ablagepositionen 14 an dem Paketträger 2 in derselben horizontalen Ebene und damit in derselben Höhe angeordnet sind. Dies hat zur Folge, dass die Greifer 4 ausgehend von ihrer Ausgangsposition an ihrer jeweiligen Linearführung 15 zur Aufnahme und zur Ablage von Latten 19 in vertikaler Richtung dieselbe Strecke zurücklegen.

Der Paketträger 2 weist eine höhenverstellbare Aufnahme 17 für ein Schnittholzpaket 18 auf. Durch den lagenweisen Aufbau des Schnittholzpakets 18 nimmt seine Höhe mit jeder Lage 20 von Schnittholzprodukten 21 zu. Um diese Höhenzunahme des Schnittholzpaket 18 an dem Paketträger 2 auszugleichen und die Ablagepositionen 14 für die Latten 19 an der obersten Lage 20 von Schnittholzprodukten in derselben horizontalen Ebene zu halten, kann die Aufnahme 17 für das Schnittholzpaket 18 (vergleiche Figur 4) entsprechend der sich verändernden Höhe des Schnittholzpakets 18 abgesenkt werden kann.

Die in den Figuren gezeigten Schnittholzstapelanlagen 100 weisen jeweils eine Schnittholzzuführvorrichtung 22 und eine jeweils stark schematisiert dargestellte Paketabführvorrichtung 23 auf. Mithilfe der jeweiligen Schnittholzzuführvorrichtung 22 können Lagen 20 von Schnittholzprodukten 21 dem Paketträger 2 der jeweiligen Lattenlegevorrichtung 1 zugeführt werden.

Ist ein Schnittholzpaket 18 am jeweiligen Paketträger 2 fertiggestellt, kann das Schnittholzpaket 18 mithilfe der Paketabführvorrichtung 23 von dem Paketträger 2 entnommen und einem nachgelagerten Bearbeitungsschritt oder Handhabungsschritt zugeführt werden.

Die in den Figuren gezeigten Schnittholzstapelanlagen 100 und ihre Lattenlegevorrichtungen 1 eignen sich zur Durchführung des nachfolgend beschriebenen Verfahrens zum Ablegen von Latten 19 auf Lagen 20 von Schnittholzprodukten 21 bei der Schnittholzpaketierung. Dabei werden Latten 19 in der Bereitstellungszone 5 der jeweiligen Lattenlegevorrichtung 1 vereinzelt bereitgestellt, von dort mit einer Greifvorrichtung 3 der Lattenlegevorrichtung 1 aufgenommen und mit der Greifvorrichtung 3 auf eine oberste Lage 20 von Schnittholzprodukten 21 eines aufzubauenden Schnittholzpakets 18 abgelegt.

Figur 4 verdeutlicht, dass die Ablage von Latten 19 dabei immer auf die oberste Lage 20 von Schnittholzprodukten 21 des jeweils aufzubauenden und an dem Paketträger 2 angeordneten Schnittholzpakets 18 erfolgt.

Besonders effizient ist das Verfahren, wenn mehrere Latten 19, vorzugsweise alle für eine Lage 20 von Schnittholzprodukten 21 bestimmten Latten 19 in einem Aufnahmeschritt in der Bereitstellungszone 5 gemeinsam aufgenommen und in einem Ablageschritt gemeinsam auf die oberste Lage 20 von Schnittholzprodukten 21 abgelegt werden.

Die Lattenlegevorrichtungen 1 weisen jeweils eine elektromotorische Vorschubeinheit 26 auf, mit der die Greifer 4 zur Aufnahme und Ablage von Latten 19 bewegbar ist. Die Vorschubeinheit 26 erlaubt eine weg- und/oder geschwindigkeitsabhängige Steuerung der Greifer 4. So können die Greifer 4 der Greifvorrichtung 3 weg- und/oder geschwindigkeitsabhängig mit der elektromotorischen Vorschubeinheit 26 der jeweiligen Lattenlegevorrichtung 1 gesteuert werden. Die Vorschubeinheiten 26 umfassen mehrere Elektromotoren 28.

Eine Lagebestimmung der Greifer 4 kann durch einen Präzisionswegaufnehmer 27 der jeweiligen Lattenlegevorrichtung 1 erfolgen. Bei Erreichen einer Zielposition eines Greifers 4 oberhalb einer Ablageposition 14 kann die mit dem Greifer 4 gehaltene Latte 19 unter Berücksichtigung der Ablagehöhe auf eine oberste Lage 20 von Schnittholzprodukten 21, die an dem Paketträger 2 angeordnet ist, abgelegt werden. Danach kann der Greifer 4 wieder zurück in die Bereitstellungszone 5 oberhalb der ihm zugeordneten Aufnahmeposition 13 bewegt werden, um eine dort zwischenzeitlich neu positionierte Latte 19 aufzunehmen. Anschließend kann der Legevorgang von neuem beginnen.

Die Erfindung befasst sich somit mit Verbesserungen auf dem technischen Gebiet der Schnittholzpaketierung. Hierzu wird unter anderem eine Lattenlegevorrichtung 1 zum Ablegen von Latten 19 auf Lagen 20 von Schnittholzprodukten 21 eines aufzubauenden Schnittholzpakets 18 bei der Schnittholzpaketierung vorgeschlagen, wobei die Lattenlegevorrichtung 1 einen Paketträger 2, eine Greifvorrichtung 3, zumindest einen Greifer 4 für zumindest eine Latte 19 und eine Bereitstellungszone 5 umfasst. Die Greifvorrichtung 3 ist durch ihren zumindest einen Greifer 4 dazu eingerichtet, eine in der Bereitstellungszone 5 bereitgestellte Latte 19 aufzunehmen und auf eine oberste Lage 20 von Schnittholzprodukten 21, die an dem Paketträger 2 angeordnet ist, abzulegen.

### Bezugszeichenliste

- 1: Lattenlegevorrichtung
- 2: Paketträger
- 3: Greifvorrichtung
- 4: Greifer
- 5: Bereitstellungszone
- 6: Zuführvorrichtung
- 7: Förderband von 6
- 8: Förderband von 6
- 9: zweite Zuführvorrichtung
- 10: Vereinzelungsvorrichtung
- 11: Positioniervorrichtung
- 12: Positionieranschlag
- 13: Aufnahmeposition
- 14: Ablageposition
- 15: Linearführung
- 16: Führungsträger
- 17: höhenverstellbare Aufnahme an 2
- 18: Schnittholzpaket
- 19: Latte
- 20: Lage
- 21: Schnittholzprodukt
- 22: Schnittholzzuführvorrichtung
- 23: Paketabführvorrichtung
- 24: Querführung für 15,16
- 25: drittes Förderband
- 26: elektromotorische Vorschubeinheit
- 27: Präzisionswegaufnehmer
- 28: Elektromotor
- 100: Schnittholzstapelanlage

## Patentansprüche

1. Lattenlegevorrichtung (1) zum Ablegen von Latten (19) auf Lagen (20) aus Schnittholzprodukten (21) bei der Schnittholzpaketierung, wobei die Lattenlegevorrichtung (1) einen Paketträger (2), eine Greifvorrichtung (3) mit zumindest einem Greifer (4) für zumindest eine Latte (19) und eine Bereitstellungszone (5) umfasst, wobei die Greifvorrichtung (3) durch ihren zumindest einen Greifer (4) dazu eingerichtet ist, eine in der Bereitstellungszone (5) bereitgestellte Latte (19) aufzunehmen und auf eine oberste Lage (20) von Schnittholzprodukten (21), die an dem Paketträger (2) angeordnet ist, abzulegen.

2. Lattenlegevorrichtung (1) nach Anspruch 1, wobei die Lattenlegevorrichtung (1) zumindest eine Zuführvorrichtung (6), insbesondere einen Linearförderer, aufweist, mit der die Latten in die Bereitstellungszone (5) transportierbar sind und von der die Latten mit dem zumindest einen Greifer (4) aufnehmbar sind.

3. Lattenlegevorrichtung (1) nach Anspruch 1 oder 2, wobei die Lattenlegevorrichtung (1) eine erste Zuführvorrichtung (6) für einen ersten Typ von Latten und eine zweite Zuführvorrichtung (9) für einen zweiten Typ von Latten aufweist, vorzugsweise wobei die beiden Zuführvorrichtungen (6,9) nebeneinander angeordnet sind.

4. Lattenlegevorrichtung (1) nach einem der vorherigen Ansprüche, wobei die Lattenlegevorrichtung (1) zumindest eine Vereinzelungsvorrichtung (10) aufweist, die zur vereinzelten Abgabe der Latten in die Bereitstellungszone (5), insbesondere an die zumindest eine Zuführvorrichtung (6,9), eingerichtet ist.

5. Lattenlegevorrichtung (1) nach einem der vorherigen Ansprüche, wobei die Lattenlegevorrichtung (1) eine Positioniervorrichtung (11) zur Positionierung von Latten in der Bereitstellungszone (5), insbesondere an der zumindest einen Zuführvorrichtung (6,9), aufweist.

6. Lattenlegevorrichtung (1) nach dem vorherigen Anspruch, wobei die Positioniervorrichtung (11) zumindest einen Positionieranschlag (12) für Latten aufweist, der eine Aufnahmeposition (13) definiert, aus der die Latten (19) mit der Greifvorrichtung (3) aufnehmbar sind, und/oder jeweils in eine Halteposition in der Bereitstellungszone (5) bewegbar ist, insbesondere wobei die Positioniervorrichtung (11) Positionieranschläge (12) für Latten aufweist, die Aufnahmepositionen (13) in der Bereitstellungszone (5) definieren, aus denen die Latten mit der Greifvorrichtung (3) aufnehmbar sind, und/oder jeweils in eine Halteposition in der Bereitstellungszone (5) bewegbar sind.

7. Lattenlegevorrichtung (1) nach einem der vorherigen Ansprüche, wobei der zumindest eine Greifer (4) zur Aufnahme von Latten (19) in eine Aufnahmeposition (13) und zur Ablage von Latten in eine Ablageposition (14) absenkbar ist.

8. Lattenlegevorrichtung (1) nach einem der vorherigen Ansprüche, wobei die Greifvorrichtung (3) zumindest eine, vorzugweise horizontale und/oder positionsveränderliche, Linearführung (15) aufweist, entlang der der zumindest eine Greifer (4) zwischen einer Aufnahmeposition (13) und einer Ablageposition (14) bewegbar ist.

9. Lattenlegevorrichtung (1) nach einem der vorherigen Ansprüche, wobei die Greifvorrichtung (3) zumindest einen Führungsträger (16) umfasst, der an zwei unterschiedlichen Seiten jeweils eine Linearführung (15) für einen Greifer (4) aufweist.

10. Lattenlegevorrichtung (1) nach dem vorherigen Anspruch, wobei dem Führungsträger (16) eine Ablageposition (14) an dem Paketträger (2) zugeordnet ist, die mit jedem der beiden Greifer (4), die an dem Führungsträger (16) entlang ihrer jeweiligen Linearführung (15) bewegbar sind, zur Ablage von Latten anfahrbar ist.

11. Lattenlegevorrichtung (1) nach einem der beiden vorherigen Ansprüche, wobei dem Führungsträger (16) eine Aufnahmeposition (13) innerhalb der Bereitstellungszone (5) zugeordnet ist, die mit jedem der beiden Greifer (4), die an dem Führungsträger (16) entlang ihrer jeweiligen Linearführung (15) bewegbar sind, zur Aufnahme von Latten anfahrbar ist.

12. Lattenlegevorrichtung (1) nach einem der Ansprüche 9 bis 11, wobei die Greifer (4) an dem Führungsträger (16) jeweils in einer schräg zur Schwerkraftrichtung ausgerichteten Absenkbewegung in die Aufnahmeposition (13) und in die Ablageposition (14) absenkbar sind, vorzugsweise wobei Trajektorien der beiden Greifer (4) in die Aufnahmeposition (13) und in die Ablageposition (14) in einem Winkel von kleiner als 180 Grad, insbesondere in spitzem Winkel, zueinander ausgerichtet sind.

13. Lattenlegevorrichtung (1) nach einem der vorherigen Ansprüche, wobei die Greifvorrichtung (3) zumindest zwei, vorzugweise horizontale, Linearführungen (15) für Greifer (4) aufweist, deren Abstand zueinander veränderlich ist, insbesondere wobei die Greifvorrichtung (3) der Lattenlegevorrichtung (1) zumindest eine Querführung (24) zur Verstellung der Linearführungen (15) relativ zueinander aufweist.

14. Lattenlegevorrichtung (1) nach einem der vorherigen Ansprüche, wobei zwei benachbarte Aufnahmepositionen (13) in der Bereitstellungszone (5) denselben Abstand zueinander wie zwei benachbarte Ablagepositionen (14) an dem Paketträger (2) aufweisen.

15. Lattenlegevorrichtung (1) nach einem der vorherigen Ansprüche, wobei der zumindest eine Greifer (4) zur Aufnahme von unterschiedlich breiten Latten eingerichtet ist.

16. Lattenlegevorrichtung (1) nach einem der vorherigen Ansprüche, wobei eine Aufnahmeposition (13) in der Bereitstellungszone (5) und eine Ablageposition (14) an dem Paketträger (2) in derselben Horizontalebene angeordnet sind, und/oder wobei der Paketträger (2) eine höhenverstellbare Aufnahme (17) für ein Schnittholzpaket (18) aufweist.

17. Lattenlegevorrichtung (1) nach einem der vorherigen Ansprüche mit einer elektromotorischen Vorschubeinheit (26) mit zumindest einem Elektromotor (28) zum Antrieb des zumindest einen Greifers (4) und/oder mit zumindest einem Präzisionswegaufnehmer (27) zur Lagebestimmung des zumindest einen Greifers (4).

18. Schnittholzstapelanlage (100) mit einer Lattenlegevorrichtung (1) nach einem der vorherigen Ansprüche.

19. Schnittholzstapelanlage (100) nach Anspruch 17 mit einer Schnittholzzuführvorrichtung (22) und/oder einer Paketabführvorrichtung (23).

20. Verfahren zum Ablegen von Latten (19), insbesondere von Leisten und/oder Kanthölzern, auf Lagen (20) von Schnittholzprodukten (21) bei der Schnittholzpaketierung, vorzugsweise unter Verwendung einer Lattenlegevorrichtung (1) nach einem der vorherigen Ansprüche, wobei Latten (19) in einer Bereitstellungszone (5) vereinzelt bereitgestellt, von dort mit einer Greifvorrichtung (3) aufgenommen und mit der Greifvorrichtung (3) auf eine oberste Lage (20) von Schnittholzprodukten (21) eines aufzubauenden Schnittholzpakets (18) abgelegt werden.

21. Verfahren nach dem vorherigen Anspruch, wobei mehrere Latten (19), vorzugsweise alle für eine Lage (20) von Schnittholzprodukten (21) bestimmten Latten (19), in einem Aufnahmeschritt in der Bereitstellungszone (5) gemeinsam aufgenommen und in einem Ablageschritt gemeinsam auf die Lage (20) von Schnittholzprodukten (21) abgelegt werden.
